# EUROPÄISCHE PATENTSCHRIFT

(11) **EP 3 120 402 B1**
(45) Veröffentlichungstag und Bekanntmachung des Hinweises auf die Patenterteilung: **24.01.2018**
(21) Anmeldenummer: 15703748.2
(22) Anmeldetag: 29.01.2015
(51) Int. Cl.: H01M 8/04082, H01M 8/04089, H01M 8/04746, H01M 8/124, H01M 8/04225, H01M 8/0438, B60L 11/18

(54) **SYSTEM INSBESONDERE FÜR EIN KRAFT- ODER NUTZFAHRZEUG UND VERFAHREN DAFÜR**
SYSTEM, IN PARTICULAR FOR A MOTOR VEHICLE OR UTILITY VEHICLE, AND METHOD FOR THE SAME
SYSTÈME, NOTAMMENT POUR VÉHICULE AUTOMOBILE OU UTILITAIRE, ET PROCÉDÉ À CET EFFET

(30) Priorität: 17.03.2014 DE 102014204921
(43) Veröffentlichungstag der Anmeldung: 25.01.2017
(73) Patentinhaber: Robert Bosch GmbH, 70442 Stuttgart (DE)
(72) Erfinder: WACH, Achim, 71706 Markgroeningen (DE)
(86) Internationale Anmeldenummer: PCT/EP2015/051828
(87) Internationale Veröffentlichungsnummer: WO 2015/139870

(56) Entgegenhaltungen:
- EP-A1- 2 131 172
- EP-A1- 2 357 388
- WO-A2-03/010844
- DE-A1-102005 009 823
- DE-A1-102008 019 594
- DE-A1-102008 043 927

## Beschreibung

Die Erfindung geht aus von einem System zum Bevorraten von Erdgas als Kraftstoff für ein Kraft- oder Nutzfahrzeug, wobei das System wenigstens einen Vorratstank für den Kraftstoff aufweist, und ferner von einem Verfahren zum Betreiben eines derartigen Systems.

### Stand der Technik

Bei einem derartigen System handelt es sich üblicherweise um einen in einem Kraftfahrzeug oder Nutzfahrzeug aufgenommenen Flüssiggastank, wobei sich das darin eingelagerte Erdgas in verflüssigtem Zustand, typischerweise bei einer Temperatur von -162 °C befindet. Unbefriedigend bei diesem Stand der Technik ist, dass das verflüssigte Erdgas bereits nach wenigen Tagen Standzeit zu verdampfen beginnt und deshalb das in die Dampfphase übergangene Erdgas bei Überschreiten eines bestimmten Dampfdrucks im Flüssiggastank über ein Ventil in die Umgebung kontrolliert abgelassen werden muß. Dadurch kann sich eine unerwünschte Belastung der Umwelt ergeben, da das im Erdgas als Hauptkomponente vorhandene Methan (CH₄) um etwa einen Faktor 25 umweltschädlicher ist als beispielsweise Kohlendioxid (CO₂). Zudem ist das bereits in die Umgebung abgelassene Erdgas nicht mehr als Energieträger zur Versorgung einer an den Flüssiggastank angeschlossenen Brennkraftmaschine eines Kraftfahrzeugs nutzbar.

Aus der DE 10 2008 043 927 A1 sind eine Vorrichtung zur Speicherung eines Gases und ein Verfahren zur Entnahme eines Gases aus einem Sorptionsspeicher bekannt, wobei die Vorrichtung einen Sorptionsspeicher und eine Entnahmeleitung umfasst, wodurch Gas aus dem Sorptionsspeicher entnommen werden kann. Bei einer Brennkraftmaschine als Verbraucher ist das im Sorptionsspeicher gespeicherte Gas beispielsweise Erdgas.

Aus der DE 10 2005 009 823 A1 ist ein System für gasförmigen Treibstoff für ein Kraftfahrzeug mit einem Speichertank für gasförmigen Treibstoff und einem zugeordneten Drucksensor zur Überwachung des komprimierten Gases bekannt, das in dem Speichertank enthalten ist, wobei eine Treibstoffleitung vorgesehen ist, die sich von dem Treibstofftank zu einem Primärantrieb erstreckt; der Primärantrieb kann eine Brennstoffzelle oder Brennkraftmaschine umfassen.

Aus der DE 10 2008 019594 A1 ist ein wärmeisolierter Behälter zur Verwendung als Speicher für ein Betriebsmittel eines Antriebsaggregats eines Kraftfahrzeugs bekannt, wobei der Behälter einen Außenbehälter und einen in dem Außenbehälter gehaltenen Innenbehälter aufweist, welcher mit mindestens einem Sensor versehen ist, um Verformungen des Tanks bzw. Behälters zu messen.

Aus der WO 03/010844 A2 ist ein elektrisches Energieerzeugungssystem bekannt, das einen Brennstoffzellenstapel mit wenigstens einer Feststoffpolymer-Brennstoffzelle, ein Kühlsystem mit einem Kühlmittelströmungspfad, ein Brennstoff-Regelungssystem zur Regelung der Zufuhr von Brennstoff aus einem Brennstoffvorrat zu dem Stapel über einen Brennstoffströmungspfad, und einen Wasserstoffkonzentrationssensor aufweist.

Aus der EP 2 131 172 A1 ist eine Gasführungsvorrichtung zum Verbinden einer Gasvorratseinrichtung mit einer Gasverbrauchseinrichtung bekannt, wobei die Gasverbrauchseinrichtung ein Brennstoffzellensystem sein kann. Zwischen der Gasvorratseinrichtung und der Gasverbrauchseinrichtung verläuft eine Leitung, über die Gas aus der Gasvorratseinrichtung zu der Gasverbrauchseinrichtung geführt wird.

Aus der EP 2 357 388 A1 ist ein Ventilblock zum Steuern von gasförmigen Fluiden mit wenigstens einem den Block durchtretenden Kanal zum Leiten eines Fluids bekannt.

### Offenbarung der Erfindung

Das System mit den Merkmalen des Patentanspruchs 1 hat den Vorteil, dass aus der Flüssigphase verdampftes Erdgas aus dem Vorratstank bzw. Flüssiggastank kontrolliert in eine mit letzterem zusammenwirkende Brennstoffzelle einspeisbar ist, welche die chemische Energie des ihr aus dem Flüssiggastank zugeführten Erdgases ihrem Wirkungsgrad entsprechend direkt in elektrische Energie umsetzen kann und diese mithin für einen an die Brennstoffzelle elektrisch anschließbaren Verbraucher im Kraft- oder Nutzfahrzeug unmittelbar verfügbar ist. Bei einer längeren Stillstandsphase des entsprechenden Fahrzeugs kann vorteilhaft die Brennstoffzelle des Systems das in entsprechendem Maß in dem Flüssiggastank verdampfte Erdgas in elektrische Energie zum Betrieb von elektrischen Nebenaggregaten im Fahrzeug oder zum Aufladen der Fahrzeugbatterie umsetzen. Indem die Brennstoffzelle über wenigstens einen Strömungspfad mit dem Vorratstank strömungstechnisch wirkverbindbar ist, kann dadurch das im Vorratstank aus dem verflüssigten in den gasförmigen Zustand übergegangene Erdgas über diesen Strömungspfad zu einem Gaseinlass der Brennstoffzelle abströmen. In entsprechendem Maß baut sich im Tankinnern Druck ab. Überschüssig aus der Brennstoffzelle austretendes Erdgas bzw. Restgas ist über wenigstens einen Strömungspfad zum Vorratstank rückführbar und ist somit weiterhin als Energieträger für das System verfügbar. An die Brennstoffzelle sind somit ein erster Strömungspfad, welcher der Zufuhr von Erdgas aus dem Vorratstank dient, und ein zweiter Strömungspfad, welcher der Rückführung von überschüssig aus der Brennstoffzelle austretendem Erdgas bzw. Restgas dient, angeschlossen.

Weitere vorteilhafte Weiterbildungen und Ausgestaltungen der Erfindung ergeben sich durch die in den Unteransprüchen aufgeführten Maßnahmen.

Indem die Brennstoffzelle des Systems vorzugsweise als Festoxidbrennstoffzelle ausgebildet ist, können Kohlenwasserstoffe als Hauptbestandteile von Erdgas zur Energieumsetzung direkt der Festoxidbrennstoffzelle zugeführt werden. Mithin ergibt sich dadurch ein relativ hoher Wirkungsgrad für die Energieumsetzung.

Indem dabei in dem wenigstens einen Strömungspfad wenigstens ein Ventil angeordnet ist, ist ein definiertes und kontrolliertes Freigeben oder Sperren dieses Strömungspfads durch Betätigen des entsprechenden Ventils möglich.

Eine besonders vorteilhafte Ausgestaltung der Erfindung sieht vor, dass eine Steuerungseinheit zum Steuern des wenigstens einen Ventils und der Brennstoffzelle vorgesehen ist. Dazu kann die Steuerungseinheit das wenigstens eine Ventil in einen geöffneten oder geschlossenen Schaltzustand bringen, um den entsprechenden Strömungspfad für den Kraftstoff freizugeben oder zu sperren, und bei geöffnetem Schaltzustand des Ventils die Brennstoffzelle für das zuströmende Erdgas aktivieren, um den Energieumwandlungsprozess innerhalb der Brennstoffzelle in Gang zu setzen.

Ein praktisch autark arbeitendes System ist erzielbar, indem zum kontinuierlichen Detektieren eines im Vorratstank vom Erdgas erzeugten Drucks wenigstens ein Drucksensor dem Vorratstank zugeordnet ist, wobei die Steuerungseinheit vom Drucksensor detektierte und an die Steuerungseinheit signalisierte Druckmesswerte erfasst, und zudem die Steuerungseinheit in Abhängigkeit vom Druck im Vorratstank die wenigstens eine Brennstoffzelle und das wenigstens eine Ventil steuert. Dabei besteht eine bevorzugte Ausgestaltung der Erfindung darin, dass die Steuerungseinheit nur dann den Strömungspfad zur Brennstoffzelle freigibt und die Brennstoffzelle aktiviert, wenn der erfasste Druck im Vorratstank einen vorbestimmten Druckschwellwert erreicht oder überschreitet. Insbesondere in der Stillstandsphase eines Kraft- oder Nutzfahrzeugs, wenn die entsprechende Brennkraftmaschine ausgeschaltet bzw. inaktiv ist, baut sich aufgrund des aus dem verflüssigten in den gasförmigen Zustand übergehenden Erdgases allmählich Druck im Vorratstank auf. In dem Moment, wo dieser Druck gleich groß oder größer wie der vorbestimmte bzw. voreingestellte Druckschwellwert ist, erfolgt mittels der Steuerungseinheit eine Freigabe des zur Brennstoffzelle führenden Strömungspfads, wobei das zur Brennstoffzelle dann abströmende gasförmige Erdgas dort von der mittels der Steuerungseinheit aktivierten Brennstoffzelle in elektrische Energie umsetzbar ist, die dann zur Nutzung durch einen elektrischen Verbraucher im Kraft- oder Nutzfahrzeug verfügbar ist. Durch das zur Brennstoffzelle abströmende und dann von letzterer in elektrochemischen Prozessen verarbeitete Erdgas wird eine allmähliche Absenkung des Dampfdrucks im Vorratstank bewirkt. Indem für einen Brennraum einer Brennkraftmaschine ein Strömungspfad vorgesehen ist, um den Brennraum mit Erdgas aus dem Vorratstank zumindest in einem Fahrbetrieb der Brennkraftmaschine zu versorgen, und indem der zur Brennstoffzelle führende Strömungspfad dazu dient, der Brennstoffzelle Erdgas aus dem Vorratstank zuführen zu können, wobei der zur Brennstoffzelle führende Strömungspfad nur dann freigebbar ist, wenn der erfasste Druck im Vorratstank einen vorbestimmten Druckschwellwert erreicht oder überschreitet, stellt das erfindungsgemäße System unterschiedliche Strömungspfade für die Energieverwertung des Erdgases zur Verfügung.

Das erfindungsgemäße Verfahren dient zum Betreiben des Systems und umfasst einen zyklisch durchzuführenden Verfahrensschritt des Erfassens eines im Vorratstank jeweils aktuell herrschenden zeitabhängigen Drucks sowie einen ereignisabhängigen Verfahrensschritt des Zuführens von im Dampfzustand vorliegendem Erdgas aus dem Vorratstank zur Brennstoffzelle und des Aktivierens der Brennstoffzelle, wobei der ereignisabhängige Verfahrensschritt des Zuführens und des Aktivierens nur dann erfolgt, wenn der erfasste Druck im Vorratstank einen vorbestimmten Druckschwellwert erreicht oder überschreitet. Dabei wird im aktivierten Zustand der Brennstoffzelle überschüssig zu einer Kathodenseite der Brennstoffzelle gelangtes Erdgas zum Vorratstank rückgeführt. Dadurch kann zur Gasaustrittsseite der Brennstoffzelle gelangtes und mithin beim brennstoffzelleninternen Energieumwandlungsprozess nicht verwendetes Erdgas wieder im Vorratstank gespeichert werden. Dieses zunächst überschüssige Erdgas gelangt somit nicht in die Atmosphäre, sondern steht aufgrund der Rückführung in den Vorratstank weiterhin als Energieträger dem System zur Verfügung.

### Zeichnungen

Ausführungsbeispiele der Erfindung sind in der nachfolgenden Beschreibung und in den beigefügten Zeichnungen näher erläutert. Letztere zeigen in schematisch gehaltenen Ansichten:
Fig. 1 ein erfindungsgemäßes System in einer schematisch dargestellten Anordnung, wobei das System einen Vorratstank und eine Festoxidbrennstoffzelle sowie eine dem Zusammenwirken von Vorratstank und Festoxidbrennstoffzelle dienende Steuerungseinheit aufweist,
Fig. 2 ein Flussdiagramm mit den in der Steuerungseinheit implementierten wesentlichen Verfahrensschritten gemäß einer ersten Ausführungsform des erfindungsgemäßen Verfahrens zum Betreiben des Systems und,
Fig. 3 ein Flussdiagramm mit in der Steuerungseinheit implementierten Verfahrensschritten gemäß einer zweiten Ausführungsform des erfindungsgemäßen Verfahrens.

### Beschreibung der Ausführungsformen

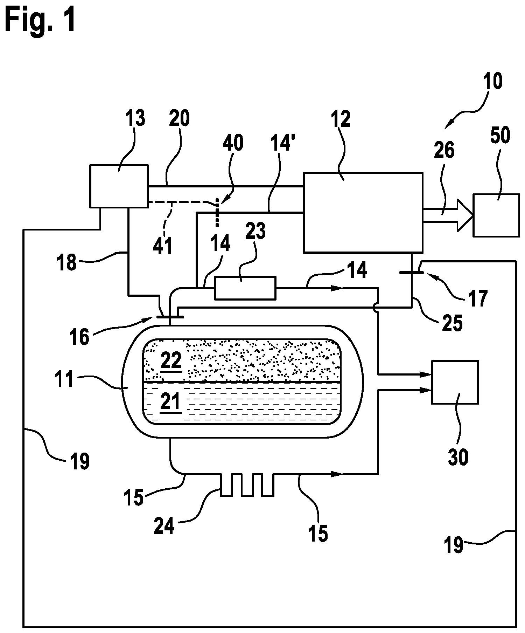

Fig. 1 zeigt ein Prinzipschaltbild des erfindungsgemäßen Systems 10 gemäß einer bevorzugten Ausführungsform. Das System 10 ist als Teil eines mit Erdgas als Kraftstoff betreibbaren Kraft- oder Nutzfahrzeugs ausgebildet und weist einen Vorratstank 11 zur Aufnahme und Speicherung von Erdgas, welches in dem als Flüssiggastank ausgebildeten Vorratstank im Wesentlichen in verflüssigtem Zustand bei tiefen Temperaturen typischerweise bei -162 °C gehalten wird, und eine Festoxidbrennstoffzelle bzw. SOFC-Brennstoffzelle 12 (SOFC: "solid oxide fuel cell") sowie eine Steuerungseinheit 13 auf. Dabei dient die Steuerungseinheit 13 dem Zusammenwirken des Flüssiggastanks 11 und der Festoxidbrennstoffzelle 12.

Bei einer derartigen Festoxidbrennstoffzelle 12 handelt es sich um eine Hochtemperatur-Brennstoffzelle, die - wie dem Fachmann bekannt ist - bei einer Betriebstemperatur von ≥ 500 °C betrieben wird und zum Betrieb kathodenseitig zugeführten Brennstoff und anodenseitig zugeführten Luftsauerstoff benötigt, um aufgrund von dann ablaufenden elektrochemischen Prozessen elektrische Energie zu produzieren, welche an einem elektrischen Ausgang der Festoxidbrennstoffzelle abgreifbar ist. Wie dem Fachmann ferner bekannt ist, erfolgt dabei der interne Ladungstransport mittels Sauerstoff-Ionen, die durch einen Elektrolyten der Festoxidbrennstoffzelle zur Anode diffundieren, um dort den Brennstoff unter Abgabe von Wasser und Elektronen oxidieren zu können, wobei diese Elektronen am elektrischen Ausgang der Festoxidbrennstoffzelle zur Verfügung stehen. Aufgrund der hohen Betriebstemperatur kann die Festoxidbrennstoffzelle Erdgas als Brennstoff direkt verarbeiten.

Im Flüssiggastank 11 sammelt sich der aus der Flüssigphase 21 des Erdgases in die Gasphase 22 übergehende Gasanteil im oberen Bereich des Flüssiggastanks 11 an. Im laufenden Betrieb der Brennkraftmaschine 30 des entsprechenden Kraftfahrzeugs, d.h. im Fahrbetrieb, gelangt gasförmig vorliegendes Erdgas über eine aus dem Flüssiggastank herausgeführte Förderleitung 14 und einen nachgeordneten Kompressor 23 zur Brennkraftmaschine 30 und wird dort zum Antrieb des Kraftfahrzeugs in einem Brennraum der Brennkraftmaschine 30 verbrannt, während eine am Flüssiggastank 11 bodenseitig herausgeführte zweite Förderleitung 15 verflüssigtes Erdgas zu einem Verdampfer 24 führt, wo das verflüssigte Erdgas in den Dampfzustand überführt wird und vom Verdampfer 24 aus zur Brennkraftmaschine 30 abströmt. Um nun auch während einer Stillstandsphase der Brennkraftmaschine den in die Gasphase 22 übergegangenen Anteil des Tankinhalts in energietechnischer Hinsicht zu nutzen, zweigt von der ersten Förderleitung 14 eine Zuführleitung 14' ab, die zur Anodenseite der Brennstoffzelle 12 führt, so dass die Festoxidbrennstoffzelle 12 mit ihrer Gaseintrittsseite über diese Zuführleitung 14' als Strömungspfad mit dem Flüssiggastank 11 in Verbindung steht und anodenseitig zugeleitetes Erdgas in elektrische Energie umsetzen kann, wenn ein erstes Ventil 16, das in der ersten Förderleitung 14 stromauf vor der Zuführleitung 14', d.h. vor dem Kompressor 23, angeordnet ist, in Offenstellung geschaltet ist und dadurch die erste Förderleitung 14 und mithin die Zuführleitung 14' zur Anodenseite der Brennstoffzelle 12 freigibt. Damit von der Festoxidbrennstoffzelle 12 nicht zur Energieumsetzung genutztes Erdgas, das dann überschüssig an der Kathodenseite der Festoxidbrennstoffzelle 12 ansteht, in den Flüssiggastank 11 rückführbar ist, ist die Festoxidbrennstoffzelle 12 kathodenseitig mit ihrem Gasaustrittsausgang (nicht dargestellt) für überschüssig anfallendes Gas an eine Rückführleitung 25 zum Flüssiggastank 11 angeschlossen, die sich als zweiter Strömungspfad zwischen der Kathodenseite der Festoxidbrennstoffzelle 12 und dem ersten Ventil 16 erstreckt. Dabei ist ein zweites Ventil 17, das in der Rückführleitung 25 nahe der Festoxidbrennstoffzelle 12 angeordnet ist, dazu vorgesehen, je nach Schaltstellung die Rückführleitung 25 zu öffnen oder zu sperren. Befindet sich das zweite Ventil 17 in Offenstellung, so kann überschüssig am Kathodenausgang austretendes Erdgas zunächst bis zum ersten Ventil 16 abströmen und dann bei in aktiviertem Zustand der Festoxidbrennstoffzelle 12 geöffnetem ersten Ventil 16 in den Flüssiggastank 11 zurück gelangen. Um sowohl die Förderleitung 14 mit der davon zur Feststoffbrennstoffzelle 12 abzweigenden Zuführleitung 14' als auch die Rückführleitung 25 selektiv, d.h. unabhängig voneinander schalten zu können, ist das Ventil 16 im Ausführungsbeispiel als Mehrwegeventil ausgebildet. Alternativ dazu kann die Rückführleitung 25 auch direkt, d.h. ohne Zwischenschaltung des Ventils 16, in den Flüssiggastank 11 hineingeführt sein. Zur Betätigung der beiden Ventile 16, 17 ist die Steuerungseinheit 13 vorgesehen, welche über eine erste Signalleitung 18 mit dem ersten Ventil 16 und über eine zweite Signalleitung 19 mit dem zweiten Ventil 17 in elektrischer Wirkverbindung steht. Eine dritte Signalleitung 20 der Steuerungseinheit 13 ist an die Festoxidbrennstoffzelle 12 angeschlossen, um letztere zu aktivieren bzw. deaktivieren, d.h. bei Aktivierung wird die SOFC-Brennstoffzelle 12 z.B. mittels Einschalten eines nicht dargestellten Heizelements auf dem Fachmann bekannte Weise auf eine Betriebstemperatur, die bei T ≥ 500°C liegt, hochgeheizt, während zur Deaktivierung ein solches Heizelement ausgeschaltet wird. Ein - nicht dargestellter - Drucksensor ist gemäß einem bevorzugten Ausführungsbeispiel im oberen Bereich des Innern des Flüssiggastanks 11 angeordnet, um kontinuierlich den dort herrschenden Dampfdruck zu erfassen, der über eine - nicht dargestellte - Messsignalleitung an die Steuerungseinheit 13 übermittelt wird. Optional kann in der Zuführleitung 14' ein in Fig. 1 gestrichelt dargestelltes Ventil 40 vorgesehen sein. Dadurch kann im Fahrbetrieb, d.h. im laufenden Betrieb der Brennkraftmaschine 30, wenn das erste Ventil 16 in Offenstellung geschaltet ist, damit Erdgas aus dem Vorratstank 11 über die Förderleitung 14 und den Kompressor 23 in den Brennraum der Brennkraftmaschine 30 strömen kann, die zur Festoxidbrennstoffzelle 12 führende Zuführleitung 14' gesondert bzw. selektiv mittels des optionalen Ventils 40 abgesperrt oder freigegeben werden. Zur Betätigung des optionalen Ventils 40 ist die Steuerungseinheit 13 über eine - gestrichelt in Fig. 1 dargestellte - elektrische Signalleitung 41 mit dem Ventil 40 elektrisch wirkverbunden. Dadurch kann im Fahrbetrieb, d.h. bei laufender Brennkraftmaschine 30, wenn die Förderleitung 14 zur Brennkraftmaschine 30 mittels der Steuerungseinheit 13 und des Ventils 16 freigegeben ist, die Zuführleitung 14' zur Festoxidbrennstoffzelle 12 abgesperrt werden, indem die Steuerungseinheit 13 über die elektrische Signalleitung 41 das optionale Ventil 40 in Sperrstellung bringt. Im Stillstandsbetrieb, d.h. bei abgeschalteter Brennkraftmaschine 30, kann die Steuerungseinheit 13 sowohl das Ventil 16 als auch das optionale Ventil 40 in die jeweilige Offenstellung schalten, um die Förderleitung 14 und die davon stromauf vor dem Kompressor 23 zur Festoxidbrennstoffzelle 12 abzweigende Zuführleitung 14' für aus dem Flüssiggastank 11 abströmendes Erdgas freizugeben.

Im Ausführungsbeispiel sind aus Gründen der Übersichtlichkeit die zur Brennkraftmaschine 30 führende Förderleitung 14 und die zur Festoxidbrennstoffzelle 12 führende Zuführleitung 14' über ein gemeinsames Ventil 16 in den Flüssiggastank 11 eingeführt; in der Praxis kann jedoch für jede der beiden Leitungen im Einkopplungsbereich des Flüssiggastanks 11 ein jeweils separates Ventil vorgesehen sein, wobei diese Ventile mittels der Steuerungseinheit 13 steuerbar sind.

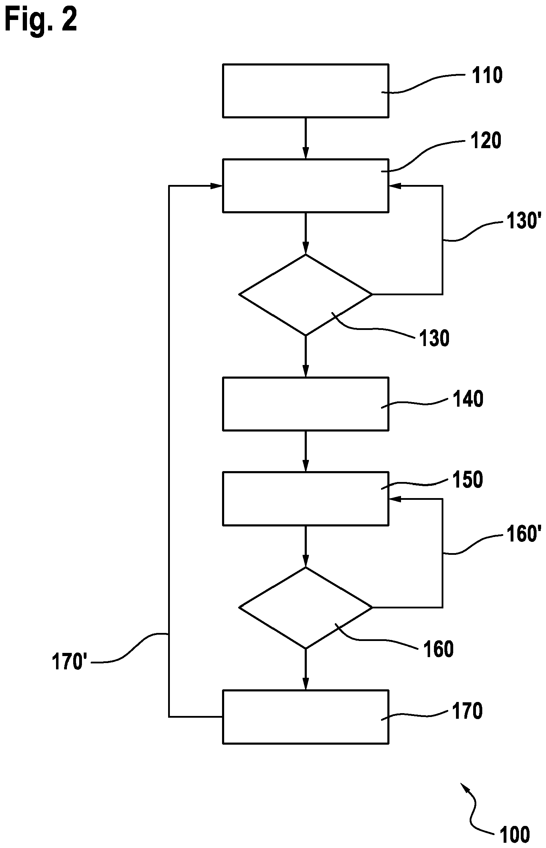

Fig. 2 zeigt ein im Ganzen mit 100 bezeichnetes Flussdiagramm mit den wesentlichen Verfahrensschritten des erfindungsgemäßen Steuerungsverfahrens, das zum Betrieb des Systems 10, d.h. dem Zusammenwirken von Festoxidbrennstoffzelle 12 und Flüssiggastank 11 dient und in der Steuerungseinheit 13 implementiert ist. In einem ersten Verfahrensschritt 110 wird zunächst die Steuerungseinheit 13 initialisiert. In einem sich daran anschließenden Verfahrensschritt 120 erfasst ein im Flüssiggastank 11 angeordneter Drucksensor (nicht dargestellt) den jeweils aktuell herrschenden Druck bzw. Dampfdruck des in der Gasphase befindlichen Anteils des Tankinhalts, wobei dieser Druckwert p(t) (p(t): Druck als Funktion der jeweiligen Zeit t) über eine nicht dargestellte Messsignalleitung zur Steuerungseinheit 13 gelangt und dort verarbeitet wird. In einem unmittelbar darauf folgenden Verfahrensschritt 130 wird ein Vergleich des aktuell zu einer Zeit t erfassten Druckwerts p(t) mit einem vorbestimmten Druckschwellwert pₛ durchgeführt. Ergibt dabei der Vergleich in Schritt 130, dass der aktuell erfasste Druckwert p(t) zum Zeitpunkt t den Druckschwellwert pₛ erreicht oder überschreitet, d.h. die Bedingung p(t) ≥ pₛ erfüllt wird, so geht die Steuerungseinheit 13 zum nächsten Schritt 140 weiter; im anderen Fall, d.h. wenn p(t) < pₛ gilt, erfolgt ein Rücksprung 130' zu Schritt 120, wobei nach einem vorbestimmten relativ kurzen Zeitintervall t + Δt (Δt: Zeitinkrement) erneut der aktuell herrschende Druck p(t') mit t' = t + Δt, d.h. zu einem Zeitpunkt t', gemessen wird und an die Steuerungseinheit 13 übertragen wird. Dabei wird der Druckschwellwert pₛ so eingestellt, dass dessen Größe kleiner als derjenige Berstdruck ist, welcher für die verwendete Ausführungsform des Flüssiggastanks 11 spezifiziert ist. Um einen sicheren Betrieb des Flüssiggastanks 11 zu sicherzustellen, wird bevorzugt der Druckschwellwert pₛ auf einen Wert eingestellt, welcher etwa 10% unterhalb des spezifizierten Berstdrucks liegt. In dem Schritt 140 wird bei positiv erfüllter Bedingung p(t) ≥ pₛ das erste Ventil 16 geöffnet und die Festoxidbrennstoffzelle 12 aktiviert, indem die Steuerungseinheit 13 über die erste Signalleitung 18 das erste Ventil 16 entsprechend betätigt und die Festoxidbrennstoffzelle 12 über die dritte Signalleitung 20 praktisch gleichzeitig aktiviert. Somit gelangt bei geöffnetem Ventil 16 Gas aus dem Flüssiggastank 11 zunächst über die erste Förderleitung 14 und dann über die Zuführleitung 14' zur Anodenseite der Festoxidbrennstoffzelle 12. Ist auch das optionale Ventil 40 in der Anordnung von Fig. 1 implementiert, so werden in Schritt 140 beide Ventile 16 und 40 zusammen von der Steuerungseinheit 13 über die Signalleitungen 18 und 41 betätigt, um die Förderleitung 14 und die Zuführleitung 14' zur Festoxidbrennstoffzelle 12 freizugeben. Außerdem wird auch das zweite Ventil 17 geöffnet, um die kathodenseitig angeschlossene Rückführleitung 25 für überschüssig abströmendes Erdgas freizugeben. In einem daran anschließenden Schritt 150 wird erneut der Druck p(t) als Funktion der Zeit t erfasst und in einem unmittelbar darauf folgenden Vergleich 160 ermittelt, ob dieser Druckwert p(t) unterhalb der Druckschwellwerts pₛ liegt, indem das Vorliegen der Bedingung p(t) < pₛ überprüft wird. Ist diese Bedingung erfüllt, so wird in Schritt 170 das erste Ventil 16 - und, falls implementiert, auch das optionale Ventil 40 - zur Festoxidbrennstoffzelle 12 geschlossen, die Festoxidbrennstoffzelle 12 deaktiviert und ferner das zweite Ventil 17 geschlossen, wonach ein Rücksprung 170' zu Schritt 120 erfolgt mit erneutem Erfassen bzw. Messen des aktuell herrschenden Drucks, so dass die Schritte 120 bis 170 praktisch in einer Endlosschleife durchlaufen werden.

Sich im Tank 11 aufbauender Überdruck wird mithin durch das Öffnen des Ventils 16 - sowie des optionalen Ventils 40 - und die dadurch erfolgende Freigabe der Zuführleitung 14' zur Festoxidbrennstoffzelle 12 abgebaut, indem das aus der Flüssigphase verdampfte Erdgas zur Anodenseite der Festoxidbrennstoffzelle 12 abströmen kann.

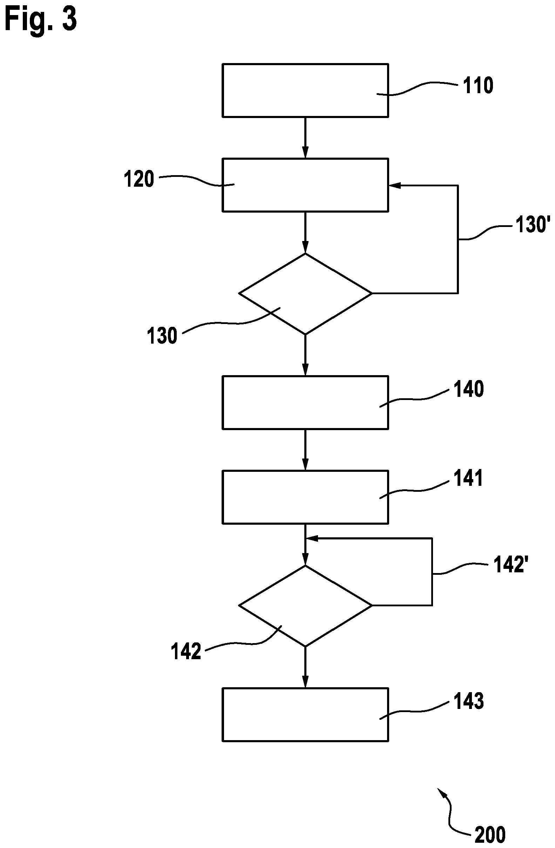

Fig. 3 zeigt ein Flussdiagramm 200 gemäß einer zweiten Ausführungsform des erfindungsgemäßen Verfahrens. Dabei bezeichnen gleiche Bezugszeichen gleiche Verfahrensschritte wie in der ersten Ausführungsform von Fig. 2. Die zweite Ausführungsform gemäß Fig. 3 unterscheidet sich von der in Fig. 2 dargestellten ersten Ausführungsform darin, dass anstelle der in Fig. 2 dargestellten Verfahrensschritte 150 bis 170 die Verfahrensschritte 141 bis 143 gemäß dem Flussdiagramm 200 von Fig. 3 durchgeführt werden, welche sich unmittelbar an den Verfahrensschritt 140 anschließen, welcher durch Öffnen des Ventils 16 - sowie des optionalen Ventils 40 - und Aktivieren der Festoxidbrennstoffzelle 12 sowie Öffnen des zweiten Ventils 17 mit Freigabe der Rückführleitung 25 definiert ist. In dem daran anschließenden Schritt 141 wird ein Zeitglied initialisiert, welches einen die Aktivierungsdauer der Festoxidbrennstoffzelle 12 bestimmenden Zeitzähler mit einer vorbestimmten Zeitdauer startet, wobei die Zeitdauer beispielsweise im Bereich von Stunden oder auch Tagen liegen kann. Nach Initialisierung des Zeitglieds erfolgt in Schritt 142 eine Abfrage, ob die eingestellte Zeitdauer abgelaufen ist. Ist diese Bedingung noch nicht erfüllt, so erfolgt nach einem vorbestimmten Zeitintervall ein Rücksprung 142' zum Eingang des Verfahrensschritts 142 mit einer erneuten Abfrage; ist jedoch die Bedingung erfüllt, d.h. ergibt die Abfrage in Schritt 142, dass die eingestellte Zeitdauer erreicht ist, so erfolgt ein Übergang zu Schritt 143, in welchem der Zeitzähler gestoppt, die Ventile 16, 17 und 40 geschlossen werden, die Festoxidbrennstoffzelle 12 deaktiviert und sodann das Verfahren beendet wird. Vorteilhaft bei dieser abgewandelten Ausführungsform des erfindungsgemäßen Verfahrens ist, dass die Festoxidbrennstoffzelle 12 für eine zuvor festgelegte Zeitdauer aktiviert bleibt, wodurch ein ständiger Wechsel zwischen nur kurzzeitig währenden Aktivierungs- und Deaktivierungsphasen der Festoxidbrennstoffzelle 12 z.B. bei Druckfluktuationen im Flüssiggastank 11 vermieden werden kann.

Zusammenfassend ist bei dem erfindungsgemäßen System vorgesehen, dass dem Flüssiggastank 11 wenigstens eine Festoxidbrennstoffzelle 12 zugeordnet ist, wobei der Festoxidbrennstoffzelle 12 Kraftstoff bzw. Erdgas aus dem Flüssiggastank 11 derart zuführbar ist, dass die Festoxidbrennstoffzelle 12 den ihr zugeführten Kraftstoff zumindest teilweise in elektrische Energie für einen elektrischen Verbraucher 50 im Kraft- oder Nutzfahrzeug umwandelt, wobei der elektrische Verbraucher 50 über eine elektrische Verbindung 26 an den elektrischen Ausgang der Festoxidbrennstoffzelle 12 angeschlossen ist. Als elektrische Verbraucher können Nebenaggregate des Fahr- oder Nutzfahrzeugs vorgesehen sein wie beispielsweise die bordeigene Klimaanlage oder Kabinenheizung. Während der Stillstandsphase des Kraft- oder Nutzfahrzeugs, in welcher typischerweise die Brennkraftmaschine 30 ausgeschaltet bzw. inaktiv ist, kann der elektrische Verbraucher die Fahrzeugbatterie sein, so dass die von der Festoxidbrennstoffzelle produzierte elektrische Energie zum Aufladen der Fahrzeugbatterie verwendbar ist. Demgegenüber wird im Fahrbetrieb des Kraft- oder Nutzfahrzeugs das im Flüssiggastank 11 gespeicherte Erdgas primär zur Kraftstoffversorgung der Brennkraftmaschine 30 eingesetzt; ist zudem die Zuführleitung 14' zur Festoxidbrennstoffzelle 12 freigeschaltet und letztere aktiviert, so kann die dabei umgesetzte elektrische Energie sowohl zum Betrieb von Nebenaggregaten im Bordnetz des Kraft- oder Nutzfahrzeugs als auch zum Aufladen der Fahrzeugbatterie verwendet werden.

Das System 10 weist außer der ersten und zweiten Förderleitung, welche der Kraftstoffversorgung der Brennkraftmaschine 30 dienen, noch den ersten Strömungspfad, der einen Abschnitt der ersten Förderleitung 14 und die Zuführleitung 14' umfasst und zur Festoxidbrennstoffzelle 12 führt, und den zweiten Strömungspfad als Rückführleitung 25 für aus der Festoxidbrennstoffzelle 12 abströmendes Erdgas auf.

Die Steuerungseinheit 13 des Systems 10 weist in ihrer einfachsten Ausführungsform einen Mikrocomputer, z.B. einen Mikrocontroller, mit einem Speicher auf, in welchem die Verfahrensschritte des erfindungsgemäßen Verfahrens als ausführbares Steuerprogramm gespeichert sind, wobei der Mikrocomputer den Ablauf des erfindungsgemäßen Verfahrens steuert und dazu die einzelnen Verfahrensschritte nacheinander ausführt. Dazu verarbeitet der Mikrocomputer der Steuerungseinheit 13 über periphere Schnittstellen den jeweils aktuell vom Drucksensor als Funktion der Zeit detektierten Dampfdruck im Tankinnern und steuert in Abhängigkeit davon die entsprechenden Ventile sowie die Festoxidbrennstoffzelle 12.

Das erfindungsgemäße Verfahren ist bei beiden Verfahrensvarianten besonders einfach zu realisieren, wenn der Dampfdruck des Erdgases im Flüssiggastank 11 in konstant gleichmäßig Zeitabständen erfasst wird.

## Patentansprüche

1. System zum Bevorraten von Erdgas als Kraftstoff für ein Kraft- oder Nutzfahrzeug, wobei das System wenigstens einen Vorratstank für den Kraftstoff aufweist, und dem Vorratstank (11) wenigstens eine Brennstoffzelle (12) zugeordnet ist, wobei der Brennstoffzelle (12) in gasförmigen Zustand übergegangenes Erdgas aus dem Vorratstank (11) zur zumindest teilweisen Umwandlung in elektrische Energie zuführbar ist, wobei die Brennstoffzelle (12) über wenigstens einen Strömungspfad (14, 14', 25) mit dem Vorratstank (11) strömungstechnisch wirkverbindbar ist, **dadurch gekennzeichnet, dass** überschüssig aus der Brennstoffzelle (12) austretendes Erdgas über wenigstens einen Strömungspfad (25) zum Vorratstank (11) rückführbar ist.

2. System nach Anspruch 1, **dadurch gekennzeichnet, dass** in dem wenigstens einen Strömungspfad (14, 14', 25) wenigstens ein Ventil (16, 17) angeordnet ist.

3. System nach Anspruch 2, **dadurch gekennzeichnet, dass** eine Steuerungseinheit (13) zum Steuern des wenigstens einen Ventils (16, 17) und der Brennstoffzelle (12) vorgesehen ist.

4. System nach Anspruch 3, **dadurch gekennzeichnet, dass** zum kontinuierlichen Detektieren eines im Vorratstank (11) vom Erdgas erzeugten Drucks wenigstens ein Drucksensor dem Vorratstank (11) zugeordnet ist, wobei die Steuerungseinheit (13) vom Drucksensor detektierte und an die Steuerungseinheit (13) signalisierte Druckmesswerte erfasst.

5. System nach Anspruch 3 oder 4, **dadurch gekennzeichnet, dass** die Steuerungseinheit (13) in Abhängigkeit vom Druck im Vorratstank (11) die wenigstens eine Brennstoffzelle (12) und das wenigstens eine Ventil (16, 17) steuert, wobei die Steuerungseinheit (13) über eine Signalleitung mit dem wenigstens einen Ventil in elektrischer Wirkverbindung steht.

6. System nach Anspruch 5, **dadurch gekennzeichnet, dass** die Steuerungseinheit (13) nur dann den Strömungspfad (14, 14') zur Brennstoffzelle (12) freigibt und die Brennstoffzelle (12) aktiviert, wenn der erfasste Druck im Vorratstank (11) einen vorbestimmten Druckschwellwert erreicht oder überschreitet, wobei eine weitere Signalleitung der Steuerungseinheit (13) an die Brennstoffzelle (12) angeschlossen ist.

7. System nach Anspruch 6, **dadurch gekennzeichnet, dass** für einen Brennraum einer Brennkraftmaschine (30) ein Strömungspfad (14) vorgesehen ist, um den Brennraum mit Erdgas aus dem Vorratstank (11) zumindest in einem Fahrbetrieb der Brennkraftmaschine zu versorgen, und dass der zur Brennstoffzelle (12) führende Strömungspfad (14') dazu dient, der Brennstoffzelle (12) Erdgas aus dem Vorratstank (11) zuführen zu können, wobei der zur Brennstoffzelle (12) führende Strömungspfad (14') nur dann freigebbar ist, wenn der erfasste Druck im Vorratstank (11) einen vorbestimmten Druckschwellwert erreicht oder überschreitet.

8. System nach einem der Ansprüche 1 bis 7, **dadurch gekennzeichnet, dass** die Brennstoffzelle (12) als Festoxidbrennstoffzelle ausgebildet ist.

9. Verfahren zum Betreiben des Systems nach einem der Ansprüche 1 bis 8, mit folgenden Verfahrensschritten:
- Erfassen (120) eines im Vorratstank (11) jeweils aktuell herrschenden zeitabhängigen Drucks, sowie
- Zuführen (140) von im Dampfzustand vorliegendem Erdgas aus dem Vorratstank (11) zur Brennstoffzelle (12) und Aktivieren der Brennstoffzelle (12) nur dann, wenn der erfasste Druck im Vorratstank (11) einen vorbestimmten Druckschwellwert erreicht oder überschreitet,
wobei im aktivierten Zustand der Brennstoffzelle überschüssig zu einer Kathodenseite der Brennstoffzelle (12) gelangtes Erdgas zum Vorratstank (11) rückgeführt wird.

## Claims

1. System for storing natural gas as a fuel for a motor vehicle or utility vehicle, wherein the system has at least one reservoir tank for the fuel, and at least one fuel cell (12) is assigned to the reservoir tank (11), wherein natural gas which has gone into a gaseous state can be fed to the fuel cell (12) from the reservoir tank (11) for at least partial conversion into electrical energy, wherein the fuel cell (12) can be operatively connected in a fluidic fashion to the reservoir tank (11) via at least one flow path (14, 14', 25), **characterized in that** natural gas which escapes as excess from the fuel cell (12) can be fed back to the reservoir tank (11) via at least one flow path (25).

2. System according to Claim 1, **characterized in that** at least one valve (16, 17) is arranged in the at least one flow path (14, 14', 25).

3. System according to Claim 2, **characterized in that** a control unit (13) is provided for controlling the at least one valve (16, 17) and the fuel cell (12).

4. System according to Claim 3, **characterized in that** in order to continuously detect a pressure generated by the natural gas in the reservoir tank (11), at least one pressure sensor is assigned to the reservoir tank (11), wherein the control unit (13) senses pressure measured values which have been detected by the pressure sensor and are signalled to the control unit (13).

5. System according to Claim 3 or 4, **characterized in that** the control unit (13) controls the at least one fuel cell (12) and the at least one valve (16, 17) as a function of the pressure in the reservoir tank (11), wherein the control unit (13) is electrically operatively connected to the at least one valve via a signal line.

6. System according to Claim 5, **characterized in that** the control unit (13) releases the flow path (14, 14') to the fuel cell (12) and activates the fuel cell (12) only when the sensed pressure in the reservoir tank (11) reaches or exceeds a predetermined pressure threshold value, wherein a further signal line of the control unit (13) is connected to the fuel cell (12).

7. System according to Claim 6, **characterized in that** a flow path (14) is provided for a combustion chamber of an internal combustion engine (30), in order to supply the combustion chamber with natural gas from the reservoir tank (11) at least in a driving mode of the internal combustion engine, and **in that** the flow path (14') which leads to the fuel cell (12) serves to enable natural gas from the reservoir tank (11) to be fed to the fuel cell (12), wherein the flow path (14') which leads to the fuel cell (12) can be released only when the sensed pressure in the reservoir tank (11) reaches or exceeds a predetermined pressure threshold value.

8. System according to one of Claims 1 to 7, **characterized in that** the fuel cell (12) is embodied as a solid oxide fuel cell.

9. Method for operating the system according to one of Claims 1 to 8, having the following method steps:
- sensing (120) a time-dependent pressure which respectively currently prevails in the reservoir tank (11), and
- feeding (140) natural gas present in the vapour state from the reservoir tank (11) to the fuel cell (12) and activating the fuel cell (12) only when the sensed pressure in the reservoir tank (11) reaches or exceeds a predetermined threshold value,
wherein in the activated state of the fuel cell natural gas which has passed as excess to a cathode side of the fuel cell (12) is fed back to the reservoir tank (11).

## Revendications

1. Système destiné à stocker du gaz naturel en tant que carburant pour un véhicule automobile ou utilitaire, dans lequel le système comporte au moins un réservoir de stockage pour le carburant, et au moins une pile à combustible (12) est associée au réservoir de stockage (11), dans lequel le gaz naturel, converti à l'état gazeux, peut être acheminé à la pile à combustible (12) depuis le réservoir de stockage (11) en vue d'une conversion au moins partielle en énergie électrique, dans lequel la pile à combustible peut être reliée fonctionnellement par une technique d'écoulement, par l'intermédiaire d'au moins un trajet d'écoulement (14, 14', 25), au réservoir de stockage (11), **caractérisé en ce que** le gaz naturel en excès sortant de la pile à combustible (12) peut être renvoyé par l'intermédiaire d'au moins un trajet d'écoulement (25) au réservoir de stockage (11).

2. Système selon la revendication 1, **caractérisé en ce qu'**au moins une vanne (16, 17) est disposée dans l'au moins un trajet d'écoulement (14, 14', 25).

3. Système selon la revendication 2, **caractérisé en ce qu'**il est prévu une unité de commande (13) destinée à commander ladite au moins une vanne (16, 17) et la pile à combustible (12).

4. Système selon la revendication 3, **caractérisé en ce qu'**au moins un capteur de pression est associé au réservoir de stockage (11) pour détecter en continu une pression produite par le gaz naturel dans le réservoir de stockage (11), dans lequel l'unité de commande (13) détecte des valeurs de mesure de pression détectées par le capteur de pression et signalées à l'unité de commande (13).

5. Système selon la revendication 3 ou 4, **caractérisé en ce que** l'unité de commande (13) commande ladite au moins une pile à combustible (12) et ladite au moins une vanne (16, 17) en fonction de la pression régnant dans le réservoir de stockage (11), dans lequel l'unité de commande (13) est en liaison fonctionnelle électrique avec ladite au moins une vanne par l'intermédiaire d'une ligne de signal.

6. Système selon la revendication 5, **caractérisé en ce que** l'unité de commande (13) ne libère le trajet d'écoulement (14, 14') vers la pile à combustible (12) et n'active la pile à combustible (12) que lorsque la pression détectée dans le réservoir de stockage (11) atteint une valeur de seuil de pression prédéterminée ou la dépasse, dans lequel une autre ligne de signal de l'unité de commande (13) est raccordée à la pile à combustible (12).

7. Système selon la revendication 6, **caractérisé en ce qu'**il est prévu, au moins dans un mode de conduite du moteur à combustion interne, un trajet d'écoulement (14) destiné à une chambre de combustion d'un moteur à combustion interne (30) afin d'alimenter la chambre de combustion en gaz naturel depuis le réservoir de stockage (11), et **en ce que** le trajet d'écoulement (14') conduisant à la pile à combustible (12) est utilisé pour pouvoir acheminer du gaz naturel à la pile à combustible (12) depuis le réservoir de stockage (11), dans lequel le trajet d'écoulement (14') conduisant à la pile à combustible (12) ne peut être libéré que lorsque la pression régnant dans le réservoir de stockage (11) atteint une valeur de seuil de pression prédéterminée ou la dépasse.

8. Système selon l'une quelconque des revendications 1 à 7, **caractérisé en ce que** la pile à combustible (12) est réalisée sous la forme d'une pile à combustible à oxyde solide.

9. Procédé de mise en fonctionnement d'un système selon l'une quelconque des revendications 1 à 8, comportant les étapes consistant à :
- détecter (120) une pression courante régnant dans le réservoir de stockage (11) et variant respectivement en fonction du temps, et
- acheminer (140) du gaz naturel présent à l'état vapeur depuis le réservoir de stockage (11) à la pile à combustible (12) et n'activer la pile à combustible (12) que lorsque la pression détectée dans le réservoir de stockage (11) atteint une valeur de seuil de pression prédéterminée ou la dépasse,
dans lequel, à l'état activé de la pile à combustible, du gaz naturel en excès atteignant un côté cathode de la pile à combustible (12) est renvoyé au réservoir de stockage (11).
